# EUROPÄISCHE PATENTSCHRIFT

(11) **EP 3 432 720 B1**
(45) Veröffentlichungstag und Bekanntmachung des Hinweises auf die Patenterteilung: **18.10.2023**
(21) Anmeldenummer: 17716099.1
(22) Anmeldetag: 23.03.2017
(51) Int. Cl.: A21C 5/00, B26D 7/26

(54) **VORRICHTUNG ZUM SCHNITT VON TEILBÄNDERN**
APPARATUS FOR CUTTING A SHEET OF DOUGH
APPAREIL POUR COUPER UNE BANDE DE PÂTE

(30) Priorität: 24.03.2016 AT 1572016; 24.03.2016 AT 1582016; 17.06.2016 AT 505552016
(43) Veröffentlichungstag der Anmeldung: 30.01.2019
(73) Patentinhaber: König Maschinen Gesellschaft mbH, 8045 Graz (AT)
(72) Erfinder: STAUFER, Wolfgang, 1020 Wien (AT); HEFNER, Josef, 91602 Dürrwangen (DE); THORMÄHLEN, Johann, 25377 Kollmar (AT); SÖNNICHSEN, Dieter, 25712 Burg (DE); STELZER, Hannes, 8502 Lannach (AT); MAIER, Gernot, 8075 Hart bei Graz (AT)
(74) Vertreter: Wildhack & Jellinek
(86) Internationale Anmeldenummer: PCT/AT2017/060075
(87) Internationale Veröffentlichungsnummer: WO 2017/161400

(56) Entgegenhaltungen:
- EP-A2- 1 920 658
- WO-A1-2005/009696
- DE-A1- 10 136 980
- DE-U1-202007 008 780
- US-B1- 6 524 090

## Beschreibung

Die Erfindung betrifft eine Vorrichtung zum Schnitt von Teilbändern mit definierter vorgebbarer Breite aus einem Teigband gemäß dem Oberbegriff des Patentanspruchs 1.

Im Stand der Technik werden Teigbänder bei Teigbandanlagen mittels Kalibrierwalzen oder anderer Walzen auf eine vorgegebene Teigdicke eingestellt. Besonderes Augenmerk wird darauf gelegt, dass die Kalibrierwalzen oder andere Walzen den gleichen Abstand zueinander haben, um eine homogene Dicke des Teigbandes zu erzielen. Weiters wird im Stand der Technik bei Längsschneideeinheiten in Teigbandanlagen die Schnittbreite von Teilstücken bzw. Teilbändern aus einem Teigband definiert eingestellt. Es wird die Schnittbreite der Längsschneideeinheit so eingestellt, dass immer gleich breite Stränge geschnitten werden, ohne auf Gewichtsunterschiede der einzelnen Teilbänder einzugehen.

Da jedoch das Gewicht der einzelnen fertigen Gebäckstücke zum Schutz der Konsumenten zumindest das Gewicht enthalten müssen, das angegeben ist und die Angabe bei Teigstücken und Teigsträngen in Gewicht und nicht in Stück erfolgt, ist ein Bäckereibetrieb verpflichtet Gebäckstücke mit dem genau angegeben Gewicht oder höherem Gewicht auszuführen. Der Durchschnitt der Gebäckstücke wird daher, um einer Fertigungstoleranz entgegen zu wirken, mit mehr Gewicht als angegeben ausgeführt. Dies bedeutet einen Nachteil der Effizienz in der Herstellung und erhöht die Rohstoffkosten. Je genauer Maschinen Teigstücke mit selbem Gewicht fertigen können, desto weniger Rohstoffverlust entsteht für den Bäckereibetrieb.

Aus der DE 20 2007 008780 U1 (DIENES WERKE [DE) vom 16. August ist beispielsweise eine Vorrichtung geeignet zum Schnitt von Teilbändern mit definierter vorgebbarer Masse bekannt. Die Vorrichtung umfasst eine Schneideinheit, die ein Messer aufweist, wobei die Schneideinheit an einem Halteelement der Vorrichtung verstellbar befestigt ist. Die Schneideinheit umfasst weiters einen Verstellmechanismus, wobei der Verstellmechanismus derart ausgebildet ist, dass die Position des Messers zur Position der Schneideinheit verstellbar ist.

Bei den bekannten Teigbandanlagen wird das Gewicht bereits geschnittener Teigstücke mittels Wiegeeinheiten aufgenommen und untergewichtige Teigstücke aussortiert, da untergewichtige Teigstücke nicht verkauft werden dürfen. Übersteigt das gemessenen Gewicht der fertigen Teigstücke einen gewissen Wert, so wird dann die Teigbandanlage angehalten und die Schneideinrichtung nachträglich nachgestellt, um den Ausschuss zu minimieren. Dieser Produktionsstop verringert die stündlich produzierten Teigstücke, steigert daher die Kosten enorm und wirkt sich auf die Kosten eines fertigen Teigstückes aus. Die aus dem Stand der Technik bekannten Teigstranganlagen können je nach Teig und Zuschnittgröße ca. 5-20% Gewichtsgenauigkeit pro Teigstück einhalten.

Ziel der Erfindung ist es, diese Gewichtsgenauigkeit der einzelnen Teigstränge deutlich zu verbessern und die Produktionskosten zu reduzieren.

Diese Aufgabe wird durch die kennzeichnenden Merkmale des Anspruchs 1 gelöst. Durch die verstellbare Position des Messers der Schneideinrichtung kann bereits eine geringe Verstellbewegung in sehr kurzer Zeit (wenigen Millisekunden) erfolgen und die Schnittbreite während des laufenden Betriebes verstellt werden. So können fertigungsbedingte Gewichtsunterschiede von Teigstücken und Teilbändern vorgreifend verhindert werden, ohne eine Teigbandanlage bzw. die Schneidanlage anhalten zu müssen.

Besonders vorteilhafte Ausführungsformen der Vorrichtung werden durch die Merkmale der abhängigen Ansprüche näher definiert:
Der Teig des Teigbandes kann einfach geschnitten werden, ohne den Teig zu stauchen oder zusätzliche Reibung zu erzeugen, wenn das Messer als Schneidscheibe ausgebildet ist und durch eine, insbesondere angetriebene, Welle rotierend antreibbar ist und wobei das Messer durch den Verstellmechanismus, entlang der Achse der Welle verstellbar ist.

Erfindungsgemäß wird die Verstellung des Messers einfach vorgenommen, wobei der Verstellmechanismus zumindest eine durch einen Antrieb, insbesondere Motor, angetriebene, scheibenförmig ausgebildete Verstellscheibe umfasst, die parallel zum Messer, insbesondere entlang der Achse der Welle, in einem Abstand zum Messer angeordnet ist, wobei an einer der Stirnseiten der Verstellscheibe eine, insbesondere drei, Rampe angeordnet ist, wobei auf dem Messer eine, insbesondere gegengleich zur Rampe ausgebildete, Rampenaufnahme ausgebildet ist, wobei, die Rampe an der Rampenaufnahme anliegt, wobei die Rampe, insbesondere gleichmäßig, in Richtung der Achse der Verstellscheibe derart ansteigt, dass bei Verstellung, vorzugsweise Verdrehung, der Verstellscheibe durch den Motor, die Rampe verstellt wird und die Position des Messers zur Position der Schneideinheit verändert wird, indem der Abstand des Messers zur Verstellscheibe vergrößert oder verringert wird.

Eine verbesserte Ausführungsform der Vorrichtung kann bereit gestellt werden, wenn die Rampe einen spiralförmigen oder kreisförmigen Verlauf, insbesondere mit konstantem Radius, aufweist oder schraubenförmig, insbesondere mit einer vorgegebenen gleichmäßigen Steigung, ausgebildet ist.

Um die Position des Messers zu fixieren und zu gewährleisten, dass die Rampe immer an der Rampenaufnahme anliegt kann vorgesehen sein, dass der Verstellmechanismus zumindest eine, insbesondere drei, Rückstellfedern umfasst, wobei die Rückstellfeder derart angeordnet ist dass sie eine Kraftwirkung entgegen der Steigung der Rampe auf das Messer bewirkt und insbesondere den Abstand des Messers zur Schneideinheit, insbesondere zur Verstellscheibe, verringert.

Die Verstellung des Verstellmechanismus kann einfach realisiert werden, wenn die Verstellscheibe eine Verzahnung aufweist, wobei die Verstellscheibe durch den Motor mittels eines Riementriebes oder einer Kette verstellbar ist, wobei die Vorrichtung ein Spannelement, insbesondere einen Kettenspanner, zur Spannung des Riementriebs oder der Kette umfasst.

Mehrere parallele Teigstränge mit vorgegebener veränderbarer Breite können einfach gleichzeitig Produziert werden, wenn die Vorrichtung eine Anzahl, vorzugsweise vier, gleich ausgebildeter Schneideinheiten mit jeweils einem Messer umfasst, wobei die Schneideinheiten an dem Halteelement in einem, insbesondere gleichmäßigen, Abstand zueinander angeordnet sind, wobei die Messer der Schneideinheiten parallel zueinander angeordnet sind, sodass ein an der Vorrichtung vorbei befördertes Teigband in mehrere Teilstücke, vorzugsweise mit gleichem Gewicht pro Längeneinheit, geteilt wird, wobei jedes Messer jeweils zu den anderen Messern und/oder den jeweiligen Schneideinheiten entlang der Breite des Teigbandes durch den jeweiligen Verstellmechanismus verstellbar ist.

Eine bevorzugte Ausbildung der Vorrichtung sieht vor, dass die Position des Messers zur Schneideinrichtung, insbesondere zur Verstellscheibe, weniger als 100mm, vorzugsweise weniger als 32mm, besonders vorteilhaft weniger als 10mm, insbesondere jeweils um weniger als 1 mm, vorzugsweise weniger als 0,1 mm, verstellbar ist.

Um die schlupffreie Übertragung zwischen Antrieb und Verstellmechanismus zu gewährleisten und um eine händische Vorpositionierung der Grundposition zu erlauben, kann vorgesehen sein, dass die Schneideinheit mittels eines Spannmechanismus auf dem Halteelement befestigt ist, wobei die Schneideinheit nach Öffnen des Spannmechanismus auf dem Halteelement, insbesondere manuell, verstellbar, insbesondere verschiebbar, ist und derart eine Voreinstellung der Breite der geschnittenen Teilstücke des Teigbandes bzw. der Lage des Messers zum Teigband erfolgen kann.

Um eine gewichtsgenaue Fertigung der Teilbänder bzw. Teigstücke zu erreichen kann vorgesehen, sein, dass die Vorrichtung eine Steuereinheit umfasst, mit der die Position des Messers, insbesondere der Messer, zum Teigband einstellbar und vorgebbar ist, wobei insbesondere die Position der Messer durch die Steuereinheit, entsprechend der Massenverteilung entlang der Breite des Teigbandes derart veränderbar ist, sodass Teilstücke mit gleichem Gewicht pro Längeneinheit durch die Vorrichtung geschnitten werden.

Vorteilhaft ist vorgesehen, dass die Steuereinheit weiters derart ausgebildet ist, dass die Steuereinheit derart ausgebildet ist, dass bei Verstellung eines der Messer durch die Steuereinheit um einen definierten Wert die anderen Messer automatisch um denselben Wert, in derselben Richtung verstellbar sind.

Um die Position der Messer einfach, genau und kontrolliert einstellen zu können, ist vorgesehen, dass die Vorrichtung eine Regelsensorik und zumindest einen Positionssensor zur Bestimmung der Position des Messers, insbesondere eine Anzahl von Positionssensoren entsprechend der Anzahl der Messer, aufweist, wobei die Regelsensorik derart ausgebildet ist, dass die automatisierte Verstellung des Messers durch die von dem Positionssensor ermittelte Position des Messers und/oder des Verstellmechanismus beeinflussbar ist, wobei vorzugsweise der Positionssensor als Absolutsensor oder Referenzsensor ausgebildet ist.

Die geometrische Ausbildung und damit die erforderliche Schnittbreite eines Teigbandes kann vorteilhaft eingestellt werden, wenn die Vorrichtung einen 3D-Laserscanner oder eine Einheit zur Videoanalyse der Geometrie des Teigbandes umfasst, wobei die Steuereinheit derart ausgebildet ist, dass die Regelung der Position des Messers anhand der durch den 3D-Laserscanner oder die Einheit zur Videoanalyse der Geometrie des Teigbandes ermittelten Geometrie des Teigbandes einstellbar ist.

Eine bevorzugte automatische Vorpositionierung der Schneideinheit kann erreicht werden, wenn die Vorrichtung eine Positioniereinheit aufweist, mit der eine Vorpositionierung der Schneideinheit auf dem Halteelement automatisch einstellbar ist, wobei insbesondere die Vorpositionierung der Schneideinheit auf dem Halteelement je nach zu produzierendem Produkt vorgebbar ist. Dies ermöglicht den automatischen Produktwechsel ohne manuellen Eingriff. Durch eine automatisierte Vorpositionierung der Schneideinheiten kann eine grobe Regelung mit großem Verstellweg realisiert werden bei gleichzeitiger feiner Regelung der Position der Messer mittels des Verstellmechanismus.

Um eine variable Anzahl von Schneideinheiten einsetzen zu können, ohne diese von der Vorrichtung zu entfernen oder wieder Einzusetzen, kann vorgesehen sein, dass das Halteelement über den Bereich, in dem das Teigband innerhalb der Vorrichtung transportiert wird, hinaus fortgesetzt ist, wobei das Halteelement einen Parkbereich für zumindest eine Schneideinheit aufweist, der derart ausgebildet ist, dass bei Veränderung der Anzahl der benötigten Schneideinheiten die nicht benötigten Schneideinheiten in den Parkbereich verstellbar sind, sodass die Messer der im Parkbereich befindlichen Schneideinheiten das Teigband nicht schneiden bzw. von diesem abgehoben sind.

Eine bevorzugte Anwendung der Vorrichtung sieht vor, dass eine Teigbandanlage eine erfindungsgemäße Vorrichtung umfasst, der eine Wiegevorrichtung zur Messung der Massenverteilung entlang der Breite eines entlang dessen Längsrichtung bewegten Bandes vorgestellt ist und/oder
- dass die Teigbandanlage oder die Vorrichtung eine Steuereinheit umfasst, mit der die Schnittbreite der Schneideinheit, insbesondere die Position des Messers über die Breite des Teigbandes, derart unter Berücksichtigung der von der Wiegevorrichtung ermittelten Gewichtsverteilung entlang der Breite des Bandes vorgegeben wird, sodass die von der Vorrichtung in Längsrichtung des Bandes geschnittenen endlosen Teilstücke gleiche Masse je Längeneinheit aufweisen.

Weitere Vorteile und Ausgestaltungen der Erfindung ergeben sich aus der Beschreibung und den beiliegenden Zeichnungen.

Die Erfindung ist im Folgenden anhand von besonders vorteilhaften, aber nicht einschränkend zu verstehenden Ausführungsbeispielen in den Zeichnungen schematisch dargestellt und wird unter Bezugnahme auf die Zeichnungen beispielhaft beschrieben:

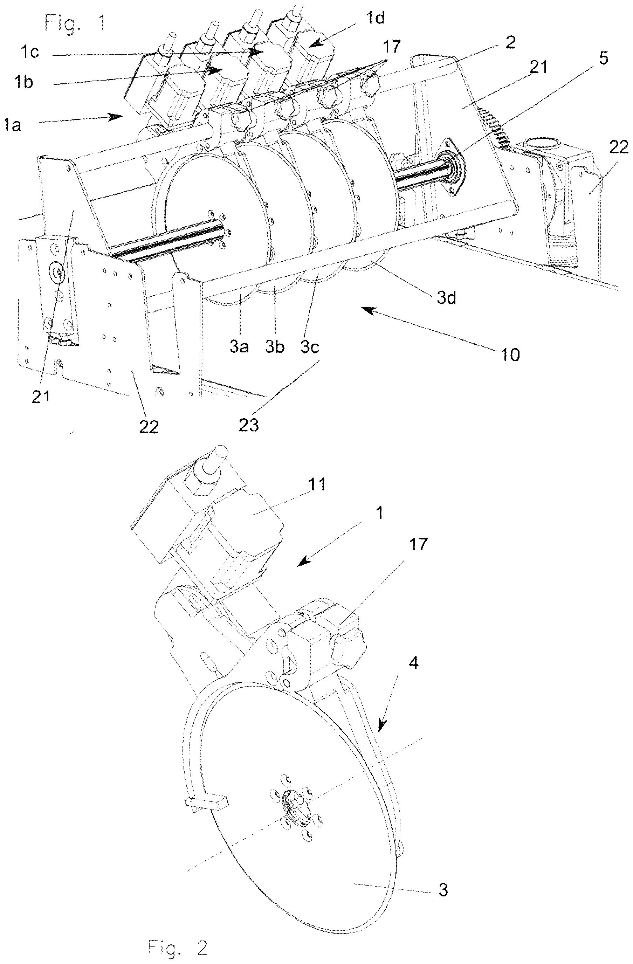

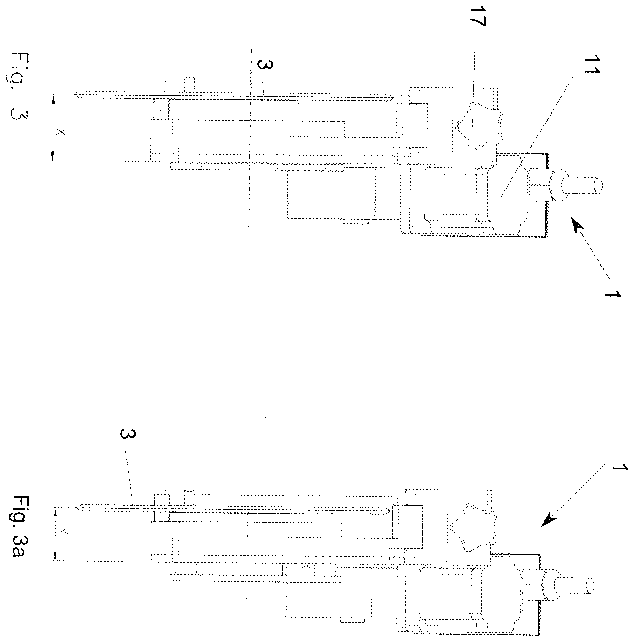

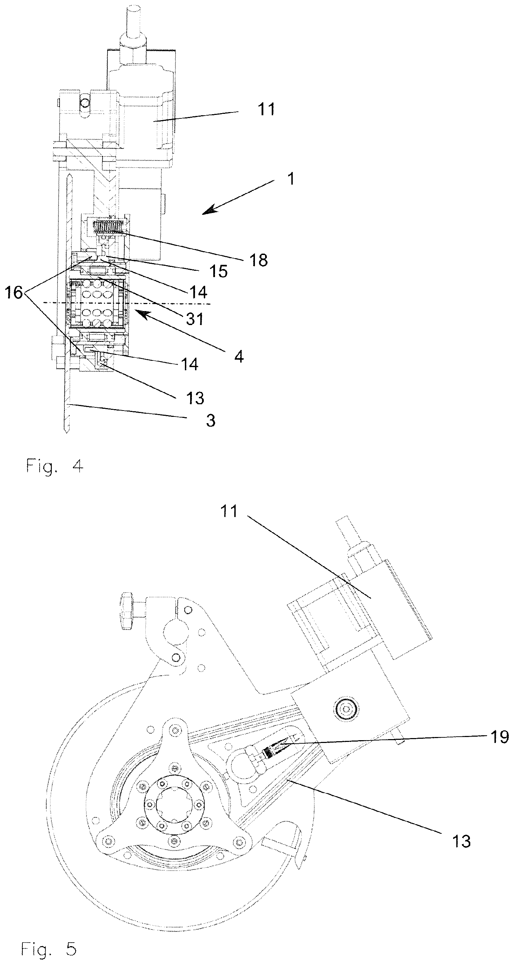

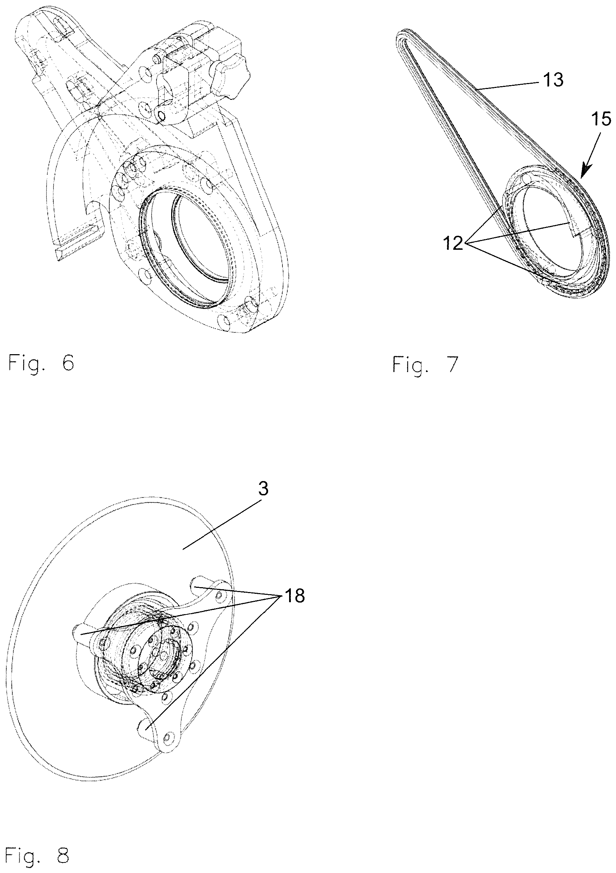

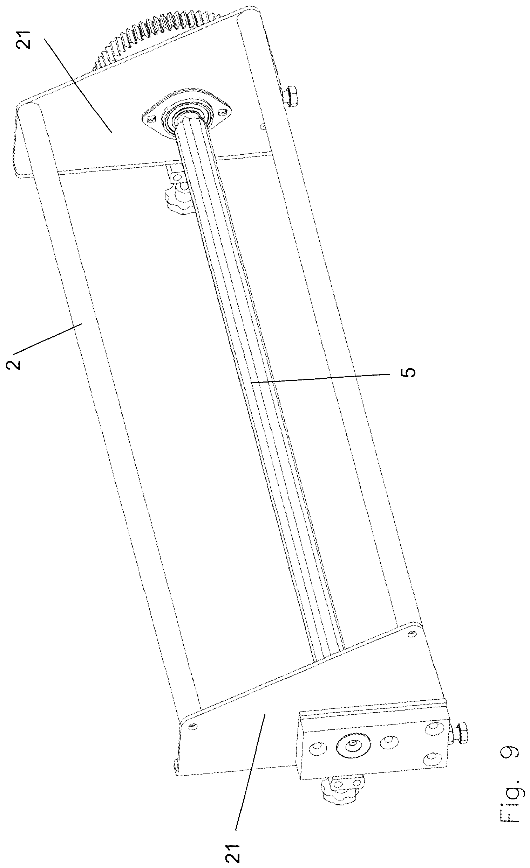

Fig. 1 zeigt eine isometrische Ansicht der erfindungsgemäßen Vorrichtung. Fig. 2 zeigt eine isometrische Ansicht einer Ausführungsform der Schneideinheit. Fig. 3 und 3a zeigen die Schneideinheit jeweils in zwei Extremlagen. Fig. 4 zeigt einen Schnitt durch die Hauptlagerung der Schneideinheit. Fig. 5 zeigt eine Seitenansicht der Schneideinheit mit Darstellung der Kettenführung. Fig. 6 zeigt eine isometrische Ansicht des Gehäuses der Schneideinheit. Fig. 7 zeigt eine isometrische Ansicht einer Verstellscheibe. Fig. 8 zeigt eine isometrische Ansicht eines Messers. Fig. 9 zeigt eine isometrische Ansicht einer Halterung mit angetriebener Welle.

**Fig. 1** zeigt eine erfindungsgemäße Vorrichtung 10 in isometrischer Ansicht. Die Vorrichtung 10 umfasst ein Halteelement 2, das als Stange mit rundem Querschnitt ausgebildet ist und an den Enden von zwei Seitenteilen 21 gehalten wird (**Fig. 9**). Die Seitenteile 21 sind an dem Rahmen 22 der Vorrichtung 10 befestigt, wobei das Halteelement 2 entlang der Breite eines Förderbandes 23 über diesem in einem Abstand parallel zur Breite des Förderbandes 23 angeordnet ist. Auf dem Förderband 23 wird im Betrieb ein Teigband (nicht dargestellt) aufgelegt, das entlang dessen Längsrichtung an der Vorrichtung 10 vorbei bzw. durch diese hindurch befördert wird.

Die Vorrichtung 10 umfasst weiters vier gleich ausgebildete Schneideinheiten 1a, 1b, 1c, 1d, die an dem Halteelement 2 mittels eines Spannmechanismus 17 befestigt sind. Jede Schneideinheit 1a, 1b, 1c, 1d weist ein Messer 3a, 3b, 3c, 3d auf, das als Schneidscheibe ausgebildet ist. Die Messer 3a, 3b, 3c, 3d sind an den Schneideinheiten 1a, 1b, 1c, 1d in Richtung der Bewegungsrichtung des Teigbandes bzw. Förderbandes 3 ausgerichtet und trennen bzw. schneiden das Teigband in fünf Teilstücke. Die Vorrichtung 10 umfasst eine Welle 5 die parallel zum Halteelement 2 angeordnet ist und die Messer 3a, 3b, 3c, 3d jeweils im Zentrum durchsetzt und diese rotierend antreibt. Die Messer 3a, 3b, 3c, 3d sind mit einem Mitnehmer 31 mit der Welle drehmomentübertragend verbunden (Fig. 7). Die Rotationsrichtung der Messer 3a, 3b, 3c, 3d kann dabei entgegen oder mit der Bewegungsrichtung des Teigbandes erfolgen oder gesperrt werden.

Die Schneideinheiten 1a, 1b, 1c, 1d können nach Öffnen des jeweiligen Spannmechanismus 17 auf dem Halteelement 2 manuell verstellt werden bzw. entlang der Länge der Stange, also entlang der Breite des Teigbandes, verschoben oder von dem Halteelement 2 entfernt werden. Dadurch erfolgt eine Voreinstellung der Breite der geschnittenen Teilstücke des Teigbandes bzw. der Lage der Messer 3 zum Teigband bzw. zur Breite des Förderbandes 23.

In **Fig.2** ist eine isometrische Ansicht einer Ausführungsform einer Schneideinheit 1 dargestellt. Die Schneideinheit 1 umfasst einen Verstellmechanismus 4, der das Messer entlang der Achse der in der zentralen Ausnehmung des Messers 3 eingeführten Welle 5 (**Fig. 1**) verstellt. Durch Verstellung des Messers 3 durch den Verstellmechanismus wird die Position des Messers 3 zur Schneideinrichtung 1 und damit die Position des Messers 3 entlang der Breite des Teigbandes automatisiert gesteuert verstellt.

Der Verstellmechanismus 4 weist einen Antrieb, bei dieser Ausführungsform einen Elektromotor 11, auf. Der Motor 11 verstellt über ein Verbindungselement, bei dieser Ausführungsform eine Kette 13, eine mechanische Stelleinheit, die eine Rampe 14 umfasst, die die Position des Messers 3 zur Position der Schneideinheit 1 verändert (**Fig. 7**). Die Schneideinheit 1 weist weiters ein Spannelement zur Spannung des Riementriebs oder der Kette 13, bei der in **Fig. 5** gezeigten Ausführungsform einen Kettenspanner 19, auf.

**Fig. 4** zeigt einen Schnitt durch die Hauptlagerung einer bevorzugten Ausführungsform der Schneideinheit 1. Die Schneideinheit 1 umfasst ein als Schneidscheibe ausgebildetes Messer 3, das über eine wie in **Fig. 1** dargestellte Welle 5 angetrieben werden kann. Die Schneideinheit 1 umfasst weiters einen Verstellmechanismus 4 mit einer mechanischen Verstelleinheit, der die Position des Messers 3 zur Position der Schneideinheit 1 verändert. Der Verstellmechanismus 4 umfasst einen Elektromotor 11, der über eine Kette 13 mit der mechanischen Stelleinheit, die bei dieser Ausführungsform als scheibenförmig ausgebildete Verstellscheibe 15 ausgebildet ist, verbunden ist (**Fig. 6** und **Fig. 7**). Die Verstellscheibe 15 ist auf dem Mitnehmer 31 des Messers 3 unabhängig von diesem in der Achse des Messers 3 drehbar gelagert (**Fig. 7**). Die Verstellscheibe 15 weist am Umfang eine Verzahnung auf, in die die Kette 13 eingreift und bei Antrieb des Motors 11 die Verstellscheibe 15 über einen definierten Umfangsabschnitt in deren Achse, also in der Achse einer in die Ausnehmung des Messers 3 eingebrachter Welle 5, verdreht. Die Verstellscheibe 15 ist in einem Abstand entlang der Achse des Messers 3 zum Messer 3 angeordnet. An einer der Stirnseiten der Verstellscheibe 15 sind drei Rampen 14 gleichmäßig über den Umfang verteilt angeordnet. Die Rampen 14 weisen einen kreisförmigen Verlauf in Bezug auf den Mittelpunkt der Verstellscheibe 15 auf, erstrecken sich somit entlang des gleichen Radius und weisen eine gleiche konstante Steigung auf. Die Rampen 14 weisen im Uhrzeigersinn gesehen eine ansteigende Höhe auf, sind also am im Uhrzeigersinn weiter gelegenen Ende, entlang der Achse der Verstellscheibe 15 gesehen, dicker als an dem anderen Ende. Auf dem Messer 3 sind drei gegengleich zur Rampe 14 ausgebildete Rampenaufnahmen 16 ausgebildet, die jeweils an der der jeweiligen Rampenaufnahme 18 gegenüberliegenden Rampe 14 anliegen.

Bei Verstellung der Verstellscheibe 15 durch den Motor 11 über die Kette 13 wird die Verstellscheibe 15 in ihrer Achse auf die Rampen 14 gesehen im Uhrzeigersinn über einen Umfangsabschnitt verdreht. Durch die Steigung der Rampen 14 wird die Rampenaufnahme 16, die gegen Verdrehung gesichert ist, entlang der Achse der Verstellscheibe 15 bzw. des Messers 3 bzw. entlang der Breite des Teigbandes und der Welle 5 verstellt und so die Position des Messers 3 zur Schneideinrichtung 1 verändert bzw. der Abstand X vergrößert und damit die Schnittbreite der Teilstücke des Teigbandes verändert. Wird die Verstellscheibe 15 entgegen dem Uhrzeigersinn verdreht, wird der Abstand X analog verringert.

Bei den in den **Fig. 4, Fig. 5** und **Fig. 6** gezeigten Ausführungsformen der Vorrichtung 10 bzw. der Schneideinheit 1 weist der Verstellmechanismus 4 drei Rückstellfedern 18 auf, wobei die Rückstellfedern 18 in gleichem Radius in Bezug auf die Mittelachse des Messers 3 gleichmäßig verteilt angeordnet sind (**Fig. 8**). Die Kraftwirkung der Rückstellfedern 18 wirkt entgegen der Steigung der Rampen 14, sodass diese eine Rückstellung des Messers 3 entgegen den Antrieb des Motors 11 bewirken bzw. die Position des Messers 3 zur Schneideinheit 1 verändern, sodass der Abstand X zwischen dem Messer 3 und der Verstellscheibe 15 verringert wird. Die Rückstellfedern 18 sind beispielsweise wie in **Fig. 7** gezeigt über Zwischenteile jeweils mit dem Messer 3 und der Verstellscheibe 15 verbunden. Weiters kann durch die Kraftwirkung der Rückstellfedern 18 die Position des Messers 3 fixiert werden. So kann eine ungewollte Verstellung des Messer 3 durch die Kraftwirkung des Teiges oder anderer Einflüsse verhindert werden. Gleichzeitig wird durch die Rückstellfedern 18 ein Überlastungsschutz gegenüber den verwendeten Komponenten bewirkt.

**Fig. 3** und **Fig. 3a** zeigen jeweils eine End- bzw. Extremposition des durch den Verstellmechanismus 4 verstellten Messers 3. Die Position des Messers 3 zur Schneideinrichtung 1 kann in der Richtung der Achse des als Schneidscheibe ausgebildeten Messers 3 um den Abstand X verstellt werden. Der Abstand X bzw. die Position des Messers 3 zur Schneideinheit ist bevorzugt um weniger als 100mm, vorzugsweise weniger als 32mm, besonders bevorzugt weniger als 16mm verstellbar, wobei die Verstellung vorteilhaft jeweils in Schritten von weniger als 1mm, vorzugsweise weniger als 0,1 mm, erfolgt.

Alternativ kann die Verstellung des Messers 3 auch durch andere mechanische Stelleinheiten erfolgen, die alternativ eine Kugelrampe, ein Schraubrad, eine Schnecke oder eine Gewindespindel umfassen, oder diese oder die Rampe 14 können auch spiralförmig an einer Stirnseite der Verstellscheibe 15 verlaufen. Die Rampen 14 können alternativ auch schraubenförmig ausgebildet sein oder eine profilierte Ausbildung aufweisen. Weiters kann die Verstellung auch durch einen Pneumatik- oder Hydraulikzylinder vorgenommen werden.

Alternativ kann das Messer 3 bzw. die Schneidescheibe auch über das darunter liegende Band oder eine Antriebsrolle angetrieben werden.

Eine Anwendung der erfindungsgemäßen Vorrichtung 10 sieht vor, dass diese innerhalb einer Teigbandanlage angeordnet bzw. verwendet wird. So kann der Vorrichtung 10 beispielsweise eine Wiegevorrichtung vorgestellt sein, mit der die Messung der Massenverteilung entlang der Breite des entlang seiner Längsrichtung bewegten Teigbandes erfasst wird. Die Schnittbreite der Schneideeinheit 1 bzw. der Schneideinheiten 1a, 1b, 1c, 1d kann dann beispielsweise über eine Steuereinheit durch die ermittelte Massenverteilung des Bandes vorgegeben werden, sodass die von der Vorrichtung 10 entlang der Längsrichtung des Bandes geschnittenen endlosen Teilstücke bzw. Teilbänder gleiche Masse je Längeneinheit des Teilbandes aufweisen. Über die Transportgeschwindigkeit und die zeitlich erfasste Massenverteilung des Teigbandes sowie die Anordnung der Vorrichtung 10 relativ zu der Wiegevorrichtung können zeitabhängig immer Teigstücke oder Teilbänder mit gleicher Masse, durch Verstellung der Schneideinheiten 1a, 1b, 1c, 1d erzeugt werden. Hierdurch wird bereits vorgreifend auf die Schnitte der Vorrichtung 10 bzw. der Schneideinheiten 1a, 1b, 1c, 1d eingewirkt und stets ausschussfrei und gewichtsgenau produziert. Beispielsweise kann für den Fall, dass ein zu schneidender Teigbereich zu schwer wird, die Schnittbreite für diesen Bereich durch Verstellung eines Messers 3a, 3b, 3c, 3d reduziert und damit das Gewicht angepasst werden. Da dies Auswirkungen auf die Schnittbreite nebenstehender Teilstücke haben kann, können die Schnittbreite der weiteren Teilstücke und damit die Position der anderen Messer 3a, 3b, 3c, 3d zu den jeweiligen Schneideinheiten 1a, 1b, 1c, 1d vorteilhaft um den selben Wert in der selben Richtung wie das erste Messer verstellt werden. Als weitere Maßnahme kann alternativ auch der Längsschnitt des Teigbandes bzw., der Teilbänder angepasst werden. Beispielsweise wir auf Grund der ermittelten Massenverteilung das Messer 3a der Schneideinheit 1a um 0,5mm verstellt, wodurch automatisch auch die Messer 3a, 3b, 3c der benachbarten Schneideinheiten 1b, 1c, 1d um 0,5 mm verstellt bzw. nachgerückt werden, um auch die anderen benachbarten Teigstücke bzw. produzierten Teilbänder gewichtsgenau zu produzieren. Durch die Steuereinheit kann, wie beschrieben aber auch eine unterschiedliche Verstellung jeder Scheideinheit 1a, 1b, 1c, 1d ermittelt und vorgegeben werden, um alle Teilbänder also bei der Ausführungsform der **Fig. 1** fünf, Teilbänder mit gleicher Masse pro Längeneinheit zu erzeugen.

Die Wiegeeinheit kann beispielsweise als gewichtsmessende Einheit ausgebildet sein oder mittels eines Laserscanners oder mit Röntgenstrahlung Unregelmäßigkeiten oder Unterschiede des Gewichts entlang der Breite und/oder Länge des Teigbandes ermitteln und daraus eine unterschiedliche Schnittbreite für die Teilstücke des Teigbandes vorgibt.

Vorteilhaft kann durch eine genaue, möglichst spielfreie Lagerung innerhalb der Verstelleinheit 4 vorgesehen sein. Weites kann durch hohe Übersetzungen in der Längsverstellung der Messer 3a, 3b, 3c, 3d bzw. dem Verstellmechanismus 4 z.B. durch Integration eines Getriebes in den Motor 11 oder durch Auswahl der Übersetzung zwischen Verstellscheibe 15 und Motor 11 die Genauigkeit der Längsschneideeinrichtung die Regelbarkeit erhöht werden. Da die Bandgeschwindigkeiten in Teigbandanlagen im Bereich von Längsschneideeinheiten, wie der Vorrichtung 10, normalerweise relativ langsam laufen (bis ca. 20m/min) kann eine relativ hohe Übersetzung für die Verstellung verwendet werden, um die Genauigkeit zu erhöhen und die Verstellgeschwindigkeit zu reduzieren.

Alternativ können auch andere Messer 3 wie eine Schneidscheibe oder ein gerades geführtes Messer oder auch ein Ultraschallmesser verwendet werden. Auch hier ist eine parallele Anordnung von mehreren Schnittelementen vorteilhaft.

Es ist vorteilhaft, wenn die genaue Position des Verstellmechanismus 4 bzw. des Messers 3 bekannt ist, um die Regelung besser steuern zu können. Hierfür kann ein Drehgeber oder ein Linearsensor mit einer entsprechenden Auflösung in den Verstellmechanismus 4 und/oder den Motor 11 integriert werden.

Die Steuereinheit kann vorteilhaft derart ausgebildet bzw. programmiert sein, dass bei Verstellung eines der Messer 3a, 3b, 3c, 3d durch die Steuereinheit um einen definierten Wert die entgegen der Verstellrichtung liegenden Messer 3a, 3b, 3c, 3d automatisch um denselben Wert verstellt werden.

Weiters kann die Vorrichtung 10 optional eine Regelsensorik und einen Positionssensor oder einen Positionssensor je Messer 3a, 3b, 3c, 3d bzw. Schneideinheit 1a, 1b, 1c, 1d aufweisen. Mit dem Positionssensor wird die Position des Messers 3 oder der Messer 3a, 3b, 3c, 3d erfasst und an die Regelsensorik übermittelt. Die Verstellung des Messers 3 oder jedes Messers 3a, 3b, 3c, 3d kann dann durch den Positionssensor überprüft und an die Regelsensorik übermittelt werden und so eine genauere Positionierung der Messer 3a, 3b, 3c, 3d bzw. des jeweiligen Verstellmechanismus 4 erzielt werden bzw. deren Position nachgeregelt werden. Die Positionsmesser können als Absolutsensoren ausgebildet sein und die Position der Messer 3a, 3b, 3c, 3d absolut, beispielsweise zu einem eingestellten Nullopunkt z.B. einem Ende der Breite des Teigbandes messen oder als Relativsensor ausgebildet sein und die Position der Messer 3a, 3b, 3c, 3d untereinander bestimmen.

Optional kann die Vorrichtung 10 einen 3D-Laserscanner oder eine Einheit zur Videoanalyse der Geometrie des Teigbandes umfassen, mit der die Geometrie des Teigbandes, also die Dicke, die Breite, die Abweichung der Dicke über die Breite usw. erfasst wird. Mittels der Steuereinheit kann dann die Regelung der Position des Messers 3 bzw. der Messer 3a, 3b, 3c, 3d anhand der durch den 3D-Laserscanner oder die Einheit zur Videoanalyse der Geometrie des Teigbandes eingestellt werden und so, zum Beispiel bei unterschiedlicher Dicke entlang der Breite des Teigbandes, Teilstücke mit gleichem Gewicht oder Teilbänder mit gleichem Gewicht je Längeneinheit, aber z.B. unterschiedlicher Breite, geschnitten werden.

Alternativ zur manuellen Verstellung der Schneideinheit 1 auf dem Halteelement 2 kann die Vorrichtung 10 eine Positioniereinheit aufweisen, mit der eine Vorpositionierung der Schneideinheit 1 auf dem Halteelement 2 automatisch eingestellt wird. So kann beispielsweise die Vorpositionierung abhängig von dem zu erzeugendem Produkt eingestellt werden und beispielsweise die Schneideinheiten 1a, 1b, 1c, 1d mit gleichem Abstand zueinander positioniert werden. Die Verstellung der Schnittbreite bzw. der Messer 3a, 3b, 3c, 3d kann dann weiters entsprechend der bestimmten Massenverteilung entlang der Breite des Teigbandes feineingestellt werden. Dies ermöglicht den automatischen Produktwechsel ohne manuellen Eingriff. Durch eine automatisierte Vorpositionierung kann eine grobe Regelung mit großem Verstellweg (1600mm oder größer) realisiert werden und die feine Regelung (<0,1mm) mittels des Verstellmechanismus 4 erfolgen.

Optional kann weiters vorgesehen sein, dass das als Stange ausgebildete Halteelement 2 über den Bereich, in dem das Teigband innerhalb der Vorrichtung transportiert, wird hinaus fortgesetzt ist. An dem Halteelement 2 ist dann über eine gewisse Länge hinweg kein Teigband unter diesem positioniert und so ein Parkbereich für eine Schneideinheit 1 ausgebildet. Wird nun, durch den Wechsel eines zu produzierenden Produktes oder auf Grund der Massenverteilung entlang der Breite des Teigbandes, eine der Schneideinheiten 1a, 1b, 1c, 1d nicht mehr benötigt, kann diese manuell oder mittels der Positioniereinheit in den Parkbereich verschoben werden, sodass das Messer 3a, 3b, 3c, 3d der verschobenen Schneideinheit 1a, 1b, 1c, 1d nicht mehr in Kontakt mit dem Teig ist und dort verbleibt bis dieses wieder gebraucht wird. Alternativ kann das Messer 3a, 3b, 3c, 3d der nicht mehr benötigten Schneideinheit 1a, 1b, 1c, 1d von dem Teigband abgehoben werden.

Weiters kann die Vorrichtung 10 auch ein einfachen Wechselsystems aufweisen, um die Anzahl der auf dem Halteelement 2 angeordneten Schneideinheiten 1a, 1b, 1c, 1d einfach verändern zu können. Dies ist beispielsweise durch eine einseitig fliegend gelagerte Welle möglich, die es erlaubt die als Schneidscheibe ausgebildeten Messer 3a, 3b, 3c, 3d einfach auf die Welle aufzuschieben.

Um eine vereinfachte Regelung realisieren zu können und auch günstigere Antriebskomponenten einsetzen zu können, kann eine gefilterte Positionsregelung herangezogen und in die Steuereinheit oder die Steuerung des Motors 11 bzw. des Verstellmechanismus 4 integriert werden.

## Patentansprüche

1. Vorrichtung (10) zum Schnitt von Teilbändern mit definierter vorgebbarer Masse aus einem auf einem Förderband transportierten Teigband, umfassend zumindest eine Schneideinheit (1) die ein Messer (3) aufweist, wobei die Schneideinheit (1) derart an einem Halteelement (2) der Vorrichtung (10) verstellbar befestigt ist, dass das Messer (3) ein auf dem Förderband (23) an der Vorrichtung (10) vorbei befördertes, entlang seiner Längsrichtung bewegtes Teigband in zumindest zwei Teilstücke vorwiegend parallel zur Bewegungsrichtung des Teigbandes trennen können, wobei die Schneideinheit (2) einen Verstellmechanismus (4) umfasst, wobei der Verstellmechanismus (4) derart ausgebildet ist, dass die Position des Messers (3) zur Position der Schneideinheit (1), insbesondere über die Breite des Teigbandes, automatisiert gesteuert verstellbar ist, **dadurch gekennzeichnet, dass** der Verstellmechanismus (4) zumindest eine durch einen Antrieb, insbesondere einen Motor (11), angetriebene, scheibenförmig ausgebildete Verstellscheibe (15) umfasst, die parallel zum Messer (3) in einem Abstand zum Messer (3) angeordnet ist, wobei an einer der Stirnseiten der Verstellscheibe (15) eine Rampe (14) angeordnet ist, wobei auf dem Messer (3) eine gegengleich zur Rampe (14) ausgebildete Rampenaufnahme (16) ausgebildet ist, wobei die Rampe (14) an der Rampenaufnahme (16) anliegt, wobei die Rampe (14), insbesondere gleichmäßig, in Richtung der Achse der Verstellscheibe (15) derart ansteigt, dass bei Verstellung, vorzugsweise Verdrehung, der Verstellscheibe (15) durch den Antrieb die Rampe (14) verstellt wird und die Position des Messers (3) zur Position der Schneideinheit (1) verändert wird, indem der Abstand (X) des Messers (3) zur Verstellscheibe (15) vergrößert oder verringert wird.

2. Vorrichtung (10) nach einem der vorangehenden Ansprüche, **dadurch gekennzeichnet, dass** das Messer (3) als Schneidscheibe ausgebildet ist und durch eine, insbesondere angetriebene, Welle (5) rotierend antreibbar ist und wobei das Messer (3) durch den Verstellmechanismus (4), entlang der Achse der Welle (5) verstellbar ist.

3. Vorrichtung (10) nach einem der vorangehenden Ansprüche, **dadurch gekennzeichnet, dass** der Antrieb als Motor (11) ausgebildet ist.,

4. Vorrichtung (10) nach einem der vorangehenden Ansprüche, wobei die Rampe (14) einen spiralförmigen oder kreisförmigen Verlauf, insbesondere mit konstantem Radius, aufweist oder schraubenförmig, insbesondere mit einer vorgegebenen gleichmäßigen Steigung, ausgebildet ist.

5. Vorrichtung (10) nach einem der vorangehenden Ansprüche, **dadurch gekennzeichnet, dass** der Verstellmechanismus (4) zumindest eine, insbesondere drei, Rückstellfedern (18) umfasst, wobei die Rückstellfeder (18) derart angeordnet ist dass sie eine Kraftwirkung entgegen der Steigung der Rampe (14) auf das Messer bewirkt und insbesondere den Abstand des Messers (3) zur Schneideinheit (1), insbesondere zur Verstellscheibe (15), verringert.

6. Vorrichtung (10) nach einem der vorangehenden Ansprüche, **dadurch gekennzeichnet, dass** die Verstellscheibe (15) eine Verzahnung aufweist, wobei die Verstellscheibe (15) durch den Motor (11) mittels eines Riementriebes oder einer Kette (13) verstellbar ist, wobei die Vorrichtung (10) ein Spannelement, insbesondere einen Kettenspanner (19), zur Spannung des Riementriebs oder der Kette (13) umfasst.

7. Vorrichtung (10) nach einem der vorangehenden Ansprüche, **dadurch gekennzeichnet, dass** die Vorrichtung (10) eine Anzahl, vorzugsweise vier, gleich ausgebildeter Schneideinheiten (1a, 1b, 1c, 1d) mit jeweils einem Messer (3a, 3b, 3c, 3d) umfasst, wobei die Schneideinheiten (1a, 1b, 1c, 1d) an dem Halteelement (2) in einem, insbesondere gleichmäßigen, Abstand zueinander angeordnet sind, wobei die Messer (3a, 3b, 3c, 3d) der Schneideinheiten (1a, 1b, 1c, 1d) parallel zueinander angeordnet sind, sodass ein an der Vorrichtung (10) vorbei befördertes Teigband in mehrere Teilstücke, vorzugsweise mit gleichem Gewicht pro Längeneinheit, geteilt wird, wobei jedes Messer (3a, 3b, 3c, 3d) jeweils zu den anderen Messern (3a, 3b, 3c, 3d) und/oder den jeweiligen Schneideinheiten (1a, 1b, 1c, 1d) entlang der Breite des Teigbandes durch den jeweiligen Verstellmechanismus (4a, 4b, 4c, 4d) verstellbar ist.

8. Vorrichtung (10) nach einem der vorangehenden Ansprüche, **dadurch gekennzeichnet, dass** die Position des Messers (3) zur Schneideinrichtung (1), insbesondere zur Verstellscheibe (15), weniger als 100mm, vorzugsweise weniger als 32mm, besonders vorteilhaft weniger als 10mm, insbesondere jeweils um weniger als 1mm vorzugsweise weniger als 0,1 mm, verstellbar ist.

9. Vorrichtung (10) nach einem der vorangehenden Ansprüche, **dadurch gekennzeichnet, dass** die Schneideinheit (1) mittels eines Spannmechanismus (17) auf dem Halteelement (2) befestigt ist, wobei die Schneideinheit (1) nach öffnen des Spannmechanismus (17) auf dem Halteelement (2), insbesondere manuell, verstellbar, insbesondere verschiebbar, ist und derart eine Voreinstellung der Breite der geschnittenen Teilstücke des Teigbandes bzw. der Lage des Messers (3) zum Teigband erfolgen kann.

10. Vorrichtung (10) nach einem der vorangehenden Ansprüche, **dadurch gekennzeichnet, dass** die Vorrichtung (10) eine Steuereinheit umfasst, mit der die Position des Messers (3), insbesondere der Messer (3a, 3b, 3c, 3d), zum Teigband einstellbar und vorgebbar ist, wobei insbesondere die Position der Messer (3) durch die Steuereinheit, entsprechend der Massenverteilung entlang der Breite des Teigbandes derart veränderbar ist, sodass Teilstücke mit gleichem Gewicht pro Längeneinheit durch die Vorrichtung (10) geschnitten werden.

11. Vorrichtung (10) nach Anspruch 10, **dadurch gekennzeichnet, dass** die Steuereinheit derart ausgebildet ist, dass bei Verstellung eines der Messer (3a, 3b, 3c, 3d) durch die Steuereinheit um einen definierten Wert die anderen Messer (3a, 3b, 3c, 3d) automatisch um denselben Wert, in derselben Richtung verstellbar sind.

12. Vorrichtung (10) nach einem der vorangehenden Ansprüche, **dadurch gekennzeichnet, dass** die Vorrichtung (10) eine Regelsensorik und zumindest einen Positionssensor zur Bestimmung der Position des Messers (3), insbesondere eine Anzahl von Positionssensoren entsprechend der Anzahl der Messer (3a, 3b, 3c, 3d), aufweist, wobei die Regelsensorik derart ausgebildet ist, dass die automatisierte Verstellung des Messers (3) durch die von dem Positionssensor ermittelte Position des Messers (3) und/oder des Verstellmechanismus (4) beeinflussbar ist, wobei vorzugsweise der Positionssensor als Absolutsensor oder Referenzsensor ausgebildet ist.

13. Vorrichtung (10) nach einem der Ansprüche 11 oder 12, **dadurch gekennzeichnet, dass** die Vorrichtung (10) einen 3D-Laserscanner oder eine Einheit zur Videoanalyse der Geometrie des Teigbandes umfasst, wobei die Steuereinheit derart ausgebildet ist, dass die Regelung der Position des Messers (3) anhand der durch den 3D-Laserscanner oder die Einheit zur Videoanalyse der Geometrie des Teigbandes ermittelten Geometrie des Teigbandes einstellbar ist.

14. Vorrichtung (10) nach einem der vorangehenden Ansprüche, **dadurch gekennzeichnet, dass** die Vorrichtung (10) eine Positioniereinheit aufweist, mit der eine Vorpositionierung der Schneideinheit (1) auf dem Halteelement (2) automatisch einstellbar ist, wobei insbesondere die Vorpositionierung der Schneideinheit (1) auf dem Halteelement (2) je nach zu produzierendem Produkt vorgebbar ist.

15. Vorrichtung (10) nach einem der vorangehenden Ansprüche, **dadurch gekennzeichnet, dass** das Halteelement (2) über den Bereich, in dem das Teigband innerhalb der Vorrichtung (10) transportiert wird hinaus, fortgesetzt ist, wobei das Halteelement (2) einen Parkbereich für zumindest eine Schneideinheit (1a, 1b, 1c, 1d) aufweist, der derart ausgebildet ist, dass bei Veränderung der Anzahl der benötigten Schneideinheiten (1a, 1b, 1c, 1d) die nicht benötigten Schneideinheiten (1a, 1b, 1c, 1d) in den Parkbereich verstellbar sind, sodass die Messer (3a, 3b, 3c, 3d) der im Parkbereich befindlichen Schneideinheiten (1a, 1b, 1c, 1d) das Teigband nicht schneiden bzw. von diesem abgehoben sind.

16. Teigbandanlage umfassend eine Vorrichtung (10) nach einem der Ansprüche 1 bis 15, wobei der Vorrichtung (10) eine Wiegevorrichtung zur Messung der Massenverteilung entlang der Breite eines entlang dessen Längsrichtung bewegten Bandes vorgestellt ist und/oder
- wobei die Teigbandanlage oder die Vorrichtung (10) eine Steuereinheit umfasst, mit der die Schnittbreite der Schneideinheit (1), insbesondere die Position des Messers (3) über die Breite des Teigbandes, derart unter Berücksichtigung der von der Wiegevorrichtung ermittelten Gewichtsverteilung entlang der Breite des Bandes vorgegeben wird, sodass die von der Vorrichtung (10) in Längsrichtung des Bandes geschnittenen endlosen Teilstücke gleiche Masse je Längeneinheit aufweisen.

## Claims

1. Device (10) for cutting partial strips with defined predeterminable mass from a dough strip, transported on a conveyor belt, comprising at least a cutting unit (1) that has a blade (3), wherein the cutting unit (1) is adjustably fastened to a retaining element (2) of the device (10) in such a way that the blade (3) cuts a dough strip, which is conveyed past the device (10) on a conveyor belt (23) and is moved in the longitudinal direction of the dough strip, into at least two partial pieces predominantly parallel to the direction of motion of the dough strip, wherein the cutting unit (2) comprises an adjustment mechanism (4), wherein the adjustment mechanism (4) is configured in such a way that the position of the blade (3) is adjustable with respect to the position of the cutting unit (1), in particular over the width of the dough strip, in an automated manner, **characterised in that** the adjustment mechanism (4) comprises at least a disc-shaped adjustment disc (15) powered by a drive, in particular a motor (11), which disc is arranged parallel to the blade (3) at a distance from the blade (3), wherein a ramp (14) is arranged at one of the front sides of the adjustment disc (15), wherein on the blade (3) a ramp receiver (16) is configured as mirror-inverted to the ramp (14), wherein the ramp (14) rests on the ramp receiver (16), wherein the ramp (14) rises, in particular uniformly, in the direction of the axis of the adjustment disc (15), in such a way that, when the adjustment disc (15) is adjusted, preferably rotated, by the drive, the ramp (14) is adjusted and the position of the blade (3) is changed with respect to the position of the cutting unit (1), **in that** the distance (X) of the blade (3) to the displacement disc (15) is increased or decreased.

2. Device (10) according to any one of the preceding claims, **characterised in that** the blade (3) is configured as a cutting disc and can be powered by rotation by a shaft (5), in particular one that is power driven, and wherein the blade (3) can be moved along the axis of the shaft (5) by the adjustment mechanism (4).

3. Device (10) according to any one of the preceding claims, **characterised in that** the drive is configured as a motor (11).

4. Device (10) according to any one of the preceding claims, **characterised in that** the ramp (14) has a spiral-shaped or round-shaped course, in particular with a constant radius, or is configured as screw-shaped, in particular with a specified uniform rise.

5. Device (10) according to any one of the preceding claims, **characterised in that** the adjustment mechanism (4) comprises at least one, in particular three return springs (18), wherein the return spring (18) is arranged in such a way that it exerts a force on the blade contrary to the rise of the ramp (14), and in particular reduces the distance of the blade (3) to the cutting unit, (1), in particular to the adjustment disc (15).

6. Device (10) according to any one of the preceding claims, **characterised in that** the adjustment disc (15) has teeth, wherein the adjustment disc (15) can be displaced by the motor (11) by means of a belt drive or a chain (13), wherein the device (10) comprises a tensing element, in particular a chain tensioner (19) to tense the belt drive or chain (13).

7. Device (10) according to any one of the preceding claims, **characterised in that** the device (10) comprises several, preferably four equally configured cutting units (1a, 1b, 1c, 1d) each having a blade (3a, 3b, 3c, 3d), wherein the cutting units (1a, 1b, 1c, 1d) are arranged on the retaining element (2) at a distance, preferably uniform, from one another, wherein the blades (3a, 3b, 3c, 3d) of the cutting units (1a, 1b, 1c, 1d) are arranged parallel to one another, in such a way that a dough strip, conveyed past the device (10), is divided into several partial pieces, preferably having equal weight per longitudinal unit, wherein each blade (3a, 3b, 3c, 3d) can be adjusted with respect to the other blades (3a, 3b, 3c, 3d) and/or the respective cutting units (1a, 1b, 1c, 1d) along the width of the dough strip by the respective adjustment mechanism (4a, 4b, 4c, 4d).

8. Device (10) according to any one of the preceding claims, **characterised in that** the position of the blade (3) with respect to the cutting device (1), in particular with respect to the adjustment disc (15), can be adjusted by less than 100 mm, preferably less than 32 mm, most preferable less than 10 mm, in particular each for less than 1 mm, preferably less than 0.1 mm.

9. Device (10) according to any one of the preceding claims, **characterised in that** the cutting unit (1) can be secured on the retaining element (2) by means of a tensing mechanism (17), wherein the cutting unit (1) after opening of the tensing mechanism (17) can be adjusted, particularly slid, on the retaining element (2), in particular manually and in such a way that a pre-setting of the width of the cut partial pieces of the dough strip or of the position of the blade (3) with respect to the dough strip can occur.

10. Device (10) according to any one of the preceding claims, **characterised in that** the device (10) comprises a control unit, by which the position of the blade (3), in particular of the blades (3a, 3b, 3c, 3d), with respect to the dough strip can be adjusted and predetermined, wherein in particular the position of the blade (3) can be modified by the control unit, corresponding to the mass distribution along the width of the dough strip, in such a way that partial pieces with equal weight per longitudinal unit are cut by the device (10).

11. Device (10) according to claim 10, **characterised in that** the control unit is configured in such a way that, when one of the blades (3a, 3b, 3c, 3d) is adjusted by the control unit by a defined value, the other blades (3a, 3b, 3c, 3d) are automatically adjusted by the same value, in the same direction.

12. Device (10) according to any one of the preceding claims, **characterised in that** the device (10) has a regulating sensor system and at least a positioning sensor to determine the position of the blade (3), in particular a number of positioning sensors corresponding to the number of blades (3a, 3b, 3c, 3d), wherein the regulating sensor system is configured in such a way that the automated adjustment of the blade (3) can be influenced by the position of the blade (3) and/or of the adjustment mechanism (4) obtained by the positioning sensor, wherein preferably the positioning sensor is configured as an absolute sensor or reference sensor.

13. Device (10) according to any one of claims 11 or 12, **characterised in that** the device (10) comprises a 3D laser scanner or a unit for video analysis of the geometry of the dough strip, wherein the control unit is configured in such a way that the regulation of the position of the blade (3) can be adjusted on the basis of the geometry provided by the 3D laser scanner or the unit for video analysis of the geometry of the dough strip.

14. Device (10) according to any one of the preceding claims, **characterised in that** the device (10) has a positioning unit with which a pre-positioning of the cutting unit (1) on the retaining element (2) can be automatically adjusted, wherein in particular the pre-positioning of the cutting unit (1) on the retaining element (2) can be determined according to the product to be produced.

15. Device (10) according to any one of the preceding claims, **characterised in that** the retaining element (2) extends beyond the area in which the dough strip is transported within the device (10), wherein the retaining element (2) has a parking area for at least a cutting unit (1a, 1b, 1c, 1d) that is configured in such a way that in changing the number of required cutting units (1a, 1b, 1c, 1d), the cutting units (1a, 1b, 1c, 1d) that are not required can be moved into the parking area, such that the blades (3a, 3b, 3c, 3d) of the cutting units (1a, 1b, 1c, 1d) situated in the parking area do not cut the dough strip or are removed from it.

16. Dough strip device comprising a device (10) according to any one of claim 1 to 15, wherein a weighing apparatus for measuring the mass distribution along the width of a strip moved along its longitudinal direction is placed before the device (10) and/or
- wherein the dough strip device or the device (10) comprises a control unit with which the cutting width of the cutting unit (1), in particular the position of the blade (3) over the width of the dough strip, can be specified in such a way while taking into account the weight distribution along the width of the strip ascertained by the weighing apparatus, such that the continuous partial pieces, cut by the device (10) in the longitudinal direction of the strip, have the same mass per longitudinal unit.

## Revendications

1. Dispositif (10) servant à couper des bandes partielles avec une masse définie et prédéterminable à partir d'une bande de pâte transportée sur une bande de transport, comprenant au moins une unité de coupe (1) qui présente un couteau (3), dans lequel l'unité de coupe (1) est fixée de manière réglable sur un élément de maintien (2) du dispositif (10) de sorte que le couteau (3) peut séparer une bande de pâte déplacée sur la bande de transport (23) au-delà du dispositif (10) le long de sa direction longitudinale en au moins deux parties principalement parallèles à la direction de déplacement de la bande de pâte, dans lequel l'unité de coupe (2) comprend un mécanisme de réglage (4), dans lequel le mécanisme de réglage (4) est conçu de manière à ce que la position du couteau (3) par rapport à la position de l'unité de coupe (1), en particulier sur la largeur de la bande de pâte, est réglable de manière automatisée, **caractérisé en ce que** le mécanisme de réglage (4) comprend au moins un disque de réglage en forme de disque (15) entraîné par un entraînement, en particulier un moteur (11), qui est disposé parallèlement au couteau (3) à distance du couteau (3), dans lequel une rampe (14) est disposée sur une des faces frontales du disque de réglage (15), dans lequel un logement de rampe (16) conçu pour être opposé à la rampe (14) est formé sur le couteau (3), dans lequel la rampe (14) repose contre le logement de rampe (16), dans lequel la rampe (14) monte, en particulier uniformément, en direction de l'axe du disque de réglage (15) de sorte que lorsque le disque de réglage (15) est réglé, de préférence tourné, par l'entraînement, la rampe (14) est réglée et la position du couteau (3) est changée par rapport à la position de l'unité de coupe (1) **en ce que** la distance (X) du couteau (3) par rapport au disque de réglage (15) est agrandie ou réduite.

2. Dispositif (10) selon l'une quelconque des revendications précédentes, **caractérisé en ce que** le couteau (3) est conçu en tant que disque de coupe et peut être entraîné en rotation par un arbre (5), en particulier un arbre entraîné, et dans lequel le couteau (3) peut être réglé par le mécanisme de réglage (4) le long de l'axe de l'arbre (5).

3. Dispositif (10) selon l'une quelconque des revendications précédentes, **caractérisé en ce que** l'entraînement est conçu en tant que moteur (11).

4. Dispositif (10) selon l'une quelconque des revendications précédentes, dans lequel la rampe (14) présente une course en spirale ou circulaire, en particulier avec un rayon constant, ou est conçue en hélice, en particulier avec une inclinaison uniforme prédéterminée.

5. Dispositif (10) selon l'une quelconque des revendications précédentes, **caractérisé en ce que** le mécanisme de réglage (4) comprend au moins un, en particulier trois, ressorts de rappel (18), dans lequel le ressort de rappel (18) est agencé de sorte qu'il exerce une force sur le couteau contre l'inclinaison de la rampe (14) et en particulier réduit la distance entre le couteau (3) et l'unité de coupe (1), en particulier le disque de réglage (15).

6. Dispositif (10) selon l'une quelconque des revendications précédentes, **caractérisé en ce que** le disque de réglage (15) présente une denture, dans lequel le disque de réglage (15) est réglable par le moteur (11) au moyen d'un entraînement à courroie ou une chaîne (13), dans lequel le dispositif (10) comprend un élément de tension, en particulier un tendeur de chaîne (19), pour tendre l'entraînement à courroie ou la chaîne (13).

7. Dispositif (10) selon l'une quelconque des revendications précédentes, **caractérisé en ce que** le dispositif (10) comprend un nombre, de préférence quatre, d'unités de coupe (1a, 1b, 1c, 1d) de conception identique, avec respectivement un couteau (3a, 3b, 3c, 3d), dans lequel les unités de coupe (1a, 1b, 1c, 1d) sont disposées sur l'élément de maintien (2) à une distance particulièrement uniforme les unes des autres, dans lequel les couteaux (3a, 3b, 3c, 3d) des unités de coupe (1a, 1b, 1c, 1d) sont disposés parallèlement les uns aux autres, de sorte qu'une bande de pâte transportée au-delà du dispositif (10) est divisée en plusieurs parties, de préférence avec le même poids par unité de longueur, dans lequel chaque couteau (3a, 3b, 3c, 3d) peut être réglé respectivement par rapport aux autres couteaux (3a, 3b, 3c, 3d) et/ou aux unités de coupe respectives (1a, 1b, 1c, 1d) le long de la largeur de la bande de pâte par le mécanisme de réglage respectif (4a, 4b, 4c, 4d).

8. Dispositif (10) selon l'une quelconque des revendications précédentes, **caractérisé en ce que** la position du couteau (3) par rapport au dispositif de coupe (1), en particulier par rapport au disque de réglage (15), est réglable de moins de 100 mm, de préférence de moins de 32 mm, de manière particulièrement avantageuse de moins de 10 mm, en particulier respectivement de moins de 1 mm, de préférence de moins de 0,1 mm.

9. Dispositif (10) selon l'une quelconque des revendications précédentes, **caractérisé en ce que** l'unité de coupe (1) est fixée sur l'élément de maintien (2) au moyen d'un mécanisme de tension (17), dans lequel l'unité de coupe (1), après ouverture du mécanisme de tension (17), est réglable, en particulier déplaçable, sur l'élément de maintien (2), en particulier manuellement, et un préréglage de la largeur des parties coupées de la bande de pâte ou de la position du couteau (3) par rapport à la feuille de pâte peut ainsi avoir lieu.

10. Dispositif (10) selon l'une quelconque des revendications précédentes, **caractérisé en ce que** le dispositif (10) comprend une unité de commande avec laquelle la position du couteau (3), en particulier des couteaux (3a, 3b, 3c, 3d), par rapport à la bande de pâte est réglable et peut être prédéterminée, dans lequel en particulier la position du couteau (3) peut être modifiée par l'unité de commande, en fonction de la répartition de la masse le long de la largeur de la bande de pâte, de sorte que des parties avec le même poids par unité de longueur sont coupées par le dispositif (10).

11. Dispositif (10) selon la revendication 10, **caractérisé en ce que** l'unité de commande est conçue de sorte que lorsqu'un des couteaux (3a, 3b, 3c, 3d) est réglé par l'unité de commande selon une valeur définie, les autres couteaux (3a, 3b, 3c, 3d) peuvent automatiquement être réglés de la même valeur, dans la même direction.

12. Dispositif (10) selon l'une quelconque des revendications précédentes, **caractérisé en ce que** le dispositif (10) présente un système de capteurs de régulation et au moins un capteur de position pour déterminer la position du couteau (3), en particulier un nombre de capteurs de position correspondant au nombre de couteaux (3a, 3b, 3c, 3d), dans lequel le système de capteurs de régulation est conçu de sorte que le réglage automatisé du couteau (3) peut être influencé par la position du couteau (3) et/ou du mécanisme de réglage (4) déterminée par le capteur de position, dans lequel le capteur de position est de préférence conçu en tant que capteur absolu ou capteur de référence.

13. Dispositif (10) selon l'une quelconque des revendications 11 ou 12, **caractérisé en ce que** le dispositif (10) comprend un scanner laser 3D ou une unité d'analyse vidéo de la géométrie de la bande de pâte, dans lequel l'unité de commande est conçue de sorte que la régulation de la position du couteau (3) est réglable au moyen de la géométrie de la bande de pâte déterminée par le scanner laser 3D ou l'unité d'analyse vidéo de la géométrie de la bande de pâte.

14. Dispositif (10) selon l'une quelconque des revendications précédentes, **caractérisé en ce que** le dispositif (10) présente une unité de positionnement avec laquelle un prépositionnement de l'unité de coupe (1) sur l'élément de maintien (2) peut être réglé automatiquement, dans lequel en particulier le prépositionnement de l'unité de coupe (1) peut être prédéterminé sur l'élément de maintien (2) en fonction du produit à fabriquer.

15. Dispositif (10) selon l'une quelconque des revendications précédentes, **caractérisé en ce que** l'élément de maintien (2) s'étend au-delà de la zone dans laquelle la bande de pâte est transportée au sein du dispositif (10), dans lequel l'élément de maintien (2) présente une zone de stationnement pour au moins une unité de coupe (1a, 1b, 1c, 1d) qui est conçue de sorte que, lorsque le nombre d'unités de coupe nécessaires (1a, 1b, 1c, 1d) change, les unités de coupe (1a, 1b, 1c, 1d) qui ne sont pas nécessaires peuvent être réglées dans la zone de stationnement, de sorte que les couteaux (3a, 3b, 3c, 3d) des unités de coupe (1a, 1b, 1c, 1d) se trouvant dans la zone de stationnement ne coupent pas la bande de pâte ou sont retirées de celle-ci.

16. Installation de bande de pâte comprenant un dispositif (10) selon l'une quelconque des revendications 1 à 15, dans lequel le dispositif (10) est présenté avec un dispositif de pesage pour mesurer la distribution de masse le long de la largeur d'une bande déplacée sur sa direction longitudinale et/ou
- dans lequel l'installation de bande de pâte ou le dispositif (10) comprend une unité de commande avec laquelle la largeur de coupe de l'unité de coupe (1), en particulier la position du couteau (3) sur la largeur de la bande de pâte, est prédéterminée en tenant compte de la distribution du poids le long de la largeur de la bande déterminée par le dispositif de pesage, de sorte que les parties sans fin coupées par le dispositif (10) dans la direction longitudinale de la bande présentent la même masse par unité de longueur.
